# DEMANDE DE BREVET EUROPEEN

(11) **EP 4 411 673 A1**
(43) Date de publication de la demande: **07.08.2024**
(21) Numéro de dépôt: 24155381.7
(22) Date de dépôt: 01.02.2024
(51) Int. Cl.: G06V 20/80, G06V 20/00, B29C 45/00

(54) **PIÈCE AUTHENTIFIABLE, FORMÉE PAR INJECTION PLASTIQUE, ET PROCÉDÉ D'AUTHENTIFICATION ASSOCIÉ**

(30) Priorité: 01.02.2023 FR 2300949
(71) Demandeur: SAS 843, 47310 Estillac (FR)
(72) Inventeur: CONZE, Pierre, 31300 TOULOUSE (FR); Hache, Grégory, 64340 BOUCAU (FR)
(74) Mandataire: Ipside

(57) **Abrégé**

L'invention concerne une pièce formée par injection d'un composant plastique dans un volume délimité par une surface. Une telle pièce comprend une pluralité d'éléments distinguables obtenus par la présence d'une quantité non négligeable d'impuretés dans le composant plastique lors de l'injection, les éléments distinguables étant identifiables sur une partie de la surface de la pièce, la partie étant appelée zone d'identification, la pièce comprenant également au moins un repère en à proximité ou à l'intérieur de la zone d'identification.

## Description

### DOMAINE TECHNIQUE DE L'INVENTION

Le domaine de l'invention est celui des pièces manufacturées.

Plus précisément, l'invention concerne une pièce authentifiable, formée par injection plastique, et procédé d'authentification associé.

L'invention trouve notamment des applications dans la traçabilité des pièces en plastique, notamment des contenants associés à leur bouchon, en particulier dans le cadre du suivi de leur recyclage.

### ÉTAT DE LA TECHNIQUE

Il est connu de l'art antérieur des techniques d'authentification des pièces en plastique, notamment basée sur des techniques de marquage laser ou microscopique afin d'inscrire une information telle qu'un code de barre, un numéro de série ou un logo.

Il existe également des techniques d'authentification basée sur l'ajout d'une puce d'identification par radiofréquence (RFID, acronyme anglais de « Radio Frequency Identification ») ou d'une pièce de sécurité tel qu'un hologramme, un filigrane, une encre de sécurité, voire un QR code (acronyme anglais de « Quick Response Code »).

Toutefois, aucune de ces techniques ne permet de répondre simultanément à tous les besoins requis, à savoir de proposer une technique d'authentification d'une pièce dont la fabrication soit facile à mettre en oeuvre dans un process industriel à bas coût, comme c'est le cas par exemple de la fabrication d'un bouchon de bouteille dont le prix unitaire est très inférieur au centime d'euro.

### EXPOSÉ DE L'INVENTION

La présente invention vise à remédier à tout ou partie des inconvénients de l'état de la technique cités ci-dessus.

À cet effet, l'invention vise une pièce formée par injection d'un composant plastique dans un volume délimité par une surface.

Une telle pièce correspond à n'importe quel type de pièce manufacturée par injection plastique, dont l'authentification est nécessaire, par exemple dans le cadre d'une traçabilité de la pièce entre la fabrication, le consommateur, voire le recyclage de la pièce. L'authentification de la pièce peut également être effectuée pour vérifier le bon routage de la pièce lors d'un process ou dans tout autre cadre nécessitant une traçabilité.

Selon l'invention, la pièce formée comprend une pluralité d'éléments distinguables obtenus par la présence d'une quantité non négligeable d'impuretés dans le composant plastique lors de l'injection, les éléments distinguables étant identifiables sur une partie de la surface de la pièce, la partie étant appelée zone d'identification, la pièce comprenant également au moins un repère à proximité ou à l'intérieur de la zone d'identification.

La présence d'impuretés entraîne ici des éléments distinguables au niveau de la pièce, qui sont généralement considérées comme des imperfections dans le cadre d'une fabrication d'une pièce par injection. De tels éléments distinguables sont visibles sur la surface extérieure de la pièce, et correspondent par exemple à des marbrures, des mouchetés, des points, des traits ou des tirets. Il convient de souligner que la forme de ces éléments distinguables peut être quelconque, dépendant notamment de la manière dont les impuretés se positionnent dans le moule d'injection par rapport au composant plastique.

Les éléments distinguables peuvent ainsi être cartographiées dans la zone d'identification de la pièce et permettent l'identification de la pièce.

Il convient en effet de souligner que les impuretés sont introduites dans le composant plastique, de manière aléatoire. Contrairement à une technique traditionnelle d'injection, où les impuretés sont limitées dans le composant plastique pour obtenir une pièce plastique sans imperfections visibles, ici des impuretés sont introduites volontairement pour créer une cartographie d'éléments distinguables dans la zone d'identification de la pièce.

Dans la mesure où le positionnement des impuretés dans le moule d'injection utilisée pour former la pièce se fait de manière aléatoire, la cartographie des éléments distinguables dans la zone d'identification peut être considérée comme unique. La probabilité pour obtenir deux pièces ayant la même cartographie peut être en effet rendue suffisamment faible en dosant la quantité d'impuretés dans le composant plastique.

Il convient de souligner que la cartographie est avantageusement orientée grâce à la présence du ou des repère(s) dont au moins la forme ou la position relative est connue. La position relative s'entend notamment entre un repère et la zone d'identification ou entre chaque repère.

Par ailleurs, le relief du repère peut correspondre à un élément de la pièce manufacturée, comme par exemple une jupe d'un bouchon, ou à un élément formé à la surface, par exemple inclus dans le moule d'injection ou formé par gravure après moulage.

Dans des modes de réalisation particuliers de l'invention, les impuretés sont formées dans la même matière que le composant plastique mais avec une teinte de couleur distincte.

Ainsi, le procédé de fabrication peut conserver une autre cadence de fabrication, sans ralentissement notable, ce qui pourrait être le cas lorsque les impuretés sont formées dans une matière distincte, comme du sable, du quartz, etc.

En outre, les impuretés ayant la même densité que le composant plastique, une meilleure dispersion des impuretés au sein du mélange avec le composant plastique peut être obtenue, évitant ainsi une agglomération des imperfections dans une partie de la zone d'identification.

Dans des modes de réalisation particuliers de l'invention, la zone d'identification présente une forme prédéterminée.

La zone d'identification présente une forme bidimensionnelle, voire tridimensionnelle, permettant d'authentifier la pièce formée en effectuant une cartographie de la zone d'identification dont la forme est avantageusement connue.

Il convient de souligner que l'authentification peut se faire via une simple photographie, ou dans des cas de forme complexe, via plusieurs photographies de la pièce, voire un scan ou une vidéo.

Dans des modes de réalisation particuliers de l'invention, la zone d'identification est plane.

Ce mode de réalisation avantageux permet d'authentifier facilement la pièce à partir d'une unique photo de la zone d'identification.

Dans des modes de réalisation particuliers de l'invention, au moins un repère présente une forme de cercle tronqué.

Un tel repère peut par exemple correspondre à un élément caractéristique de la pièce à authentifier.

Dans des modes de réalisation particuliers de l'invention, la quantité d'impuretés est comprise entre 1 et 10 % du volume du composant plastique.

Préférentiellement, la quantité d'impuretés est comprise entre 2 et 4 % du volume du composant plastique.

Dans des modes de réalisation particuliers de l'invention, au moins une dimension relative entre deux éléments du ou des repère(s) est connue.

Ainsi, il est possible d'apporter une échelle à la zone d'identification.

Dans des modes de réalisation particuliers de l'invention, la pièce forme un bouchon pour un contenant tel qu'une bouteille.

Dans des modes de réalisation particuliers de l'invention, le composant plastique est du polyéthylène haute densité (PEHD).

L'invention vise également un procédé de fabrication d'une pièce selon l'un quelconque des modes de réalisation précédents, au cours duquel lors de l'injection une quantité non négligeable d'impuretés est mélangé au composant plastique.

Il convient de souligner que le mélange peut être effectué avant ou pendant l'injection.

Dans des modes de mise en oeuvre particuliers, les impuretés sont injectées uniquement pendant au moins une période prédéterminée.

Ainsi, il est possible de restreindre la formation des éléments distinguables dans au moins une partie de la pièce. Ceci est notamment réalisable par l'utilisation de deux buses d'injection distinctes

Une variation de débit de chaque buse peut également être mise en oeuvre au cours du procédé de fabrication afin de densifier la formation d'éléments distinguables dans certaines zones.

La variation peut également créer de l'aléatoire supplémentaire au niveau de la formation des éléments distinguables dans la zone d'identification.

Dans des modes de mise en oeuvre particuliers, le procédé de fabrication comprend également une étape de marquage d'au moins un repère sur la surface de la pièce.

Le marquage peut être effectué par exemple par une technique de gravure, par une technique d'impression, ou par toute autre technique connue de l'homme du métier.

Enfin, l'invention vise aussi un procédé d'authentification d'une pièce selon l'un quelconque des modes de réalisation précédents, comprenant des étapes de :
- acquisition, par une caméra, d'au moins une image de la zone d'identification de la pièce ;
- détection du ou des repère(s) dans ladite au moins image de la zone d'identification de la pièce ;
- détermination d'une orientation de la zone d'identification par rapport à la caméra et d'une dimension caractéristique du ou des repère(s) dans l'image ;
- transformation de l'image de la zone d'identification en fonction de l'orientation déterminée auparavant, la transformation comprenant une rotation et/ou tout autre déformation géométrique de définition mathématique connue ;
- cartographie des imperfections visibles dans l'image ; et
- comparaison de la cartographie obtenue avec une base de données de cartographie existante.

Une déformation géométrique de définition mathématique connue correspond notamment à une matrice de transfert d'un repère géométrique à un autre repère géométrique. Une telle déformation peut comprendre une rotation, une homothétie, une translation, etc.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- [Fig 1] est une vue en perspective d'un exemple de mode de réalisation d'une pièce formée selon l'invention, en l'occurrence un bouchon destiné à rendre étanche une bouteille ;
- [Fig 2] est une vue en perspective d'un autre exemple de mode de réalisation d'une pièce formée selon l'invention, en l'occurrence un plateau repas ;
- [Fig 3] est une vue en perspective d'un autre exemple de mode de réalisation d'une pièce formée selon l'invention, en l'occurrence une coque d'un téléphone ;
- [Fig 4] est un schéma synoptique d'un exemple de mise en oeuvre d'un procédé de fabrication d'une pièce formée selon l'invention ;
- [Fig 5] est un schéma synoptique d'un exemple de mise en oeuvre d'un procédé d'authentification d'une pièce formée selon l'invention.

### DESCRIPTION DÉTAILLÉE DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

### Exemple d'un mode de réalisation particulier

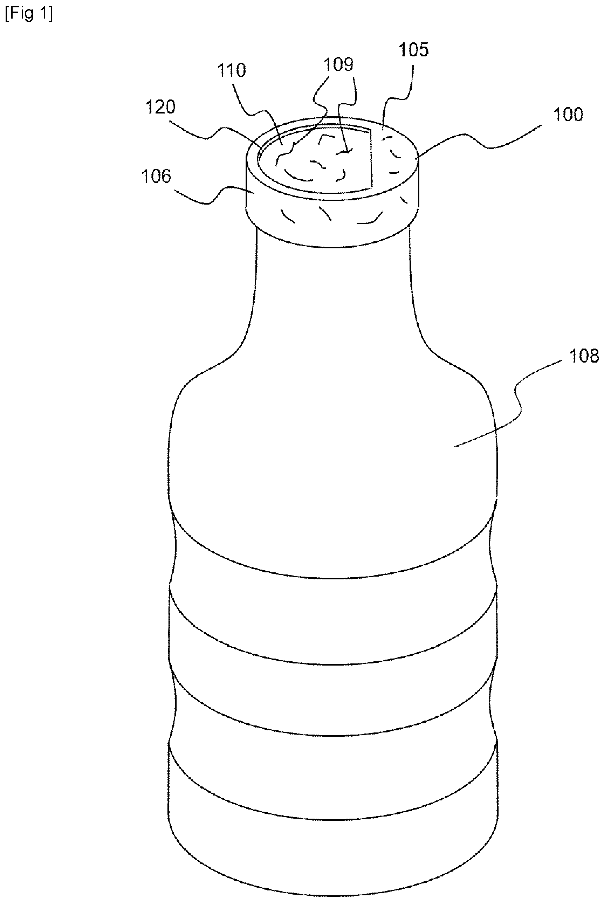

La figure 1 est une vue en perspective d'un exemple de pièce 100 formée par injection plastique. Dans le présent exemple non limitatif de l'invention, la pièce 100 est un bouchon en plastique obtenu par injection d'un composant plastique, à savoir du polyéthylène haute densité (PEHD). Le bouchon 100 comprend un couvercle 105 globalement plat et une jupe 106 s'étendant du couvercle 105. Le bouchon 100 est configuré pour obturer, de manière étanche, le goulot d'une bouteille 108 afin de pouvoir transporter un liquide, par exemple une eau minérale ou du lait, contenu dans la bouteille 108.

Dans un souci de traçabilité, le bouchon 100 comprend des éléments distinguables 109 visibles dans une zone 110 d'identification, ici présentée par le dessus du couvercle 105. On entend par « dessus du couvercle » la face extérieure opposée à la face intérieure qui est entourée par la jupe 106 et qui est destinée à venir en contact avec le goulot de la bouteille.

Les éléments distinguables 109 sont obtenues par l'ajout d'impuretés dans le composant plastique et correspondent dans le présent exemple non limitatif de l'invention à des marbrures, des traits, des points, des mouchetés ou des tirets. Les impuretés sont ici formées en PEHD mais ayant une teinte différente du PEHD utilisé comme composant principal. Par exemple, le composant principal peut être de teinte bleue ou verte, et les impuretés de teinte blanche. Il convient de souligner que des teintes plus proches peuvent être utilisées sans nuire au résultat d'authentification de la pièce 100. La différence de teinte entre le composant principal et le composant secondaire formant les impuretés est choisie en fonction de la sensibilité des capteurs d'images numériques ainsi que celle des algorithmes de traitement des images.

Le bouchon 100 comprend avantageusement au moins un repère 120 permettant de déterminer l'orientation de la zone 110 d'identification par rapport à une caméra acquérant une image du bouchon 100.

Dans le présent exemple non limitatif de l'invention, le repère 120 correspond à un creux formé en surface du couvercle 105, dont la circonférence présente une forme prédéterminée dont l'orientation dans le plan peut être reconnue. La circonférence est illustrée ici sous la forme d'un cercle tronqué mais il peut s'agir d'un triangle isocèle rectangle ou de toute autre forme quelconque.

Le repère 120 est ici formé en relief en creux mais il peut également être formé en relief en saillie par rapport à la surface du couvercle 105, ou par un marquage de couleur sur le couvercle 105.

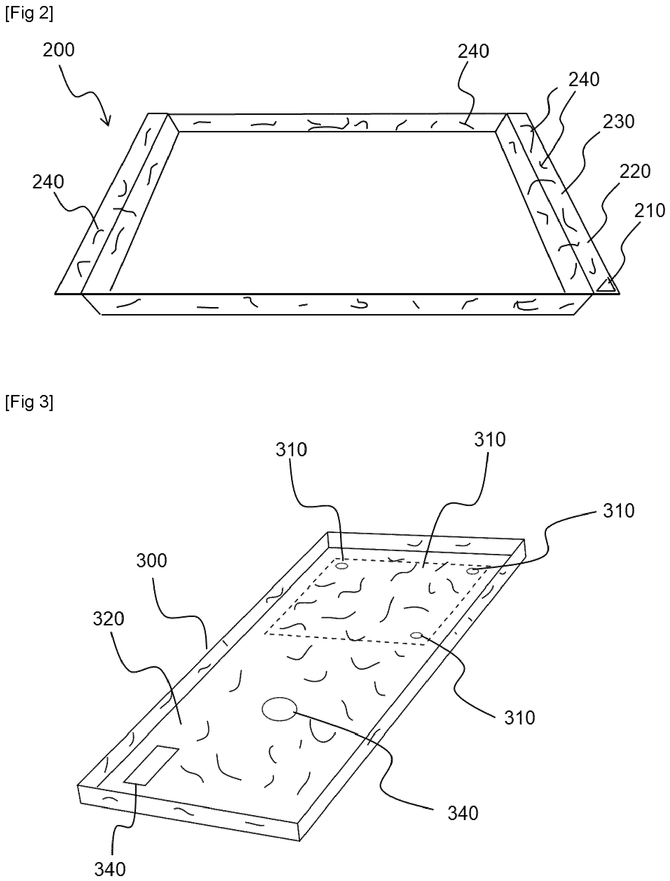

Il convient de souligner que l'invention peut s'appliquer à n'importe quel type de pièce manufacturée. Il peut par exemple s'agir d'un plateau repas 200 comme illustré en figure 2, comprenant un repère 210 ayant une forme de triangle isocèle rectangle marqué sur une poignée 220 du plateau 200, et dont la zone d'identification 230 englobant une partie des éléments distinguables 240 est formée par la poignée 220. Il peut également s'agir d'une coque 300 de téléphone comme illustrée en figure 3, comprenant trois repères 310 gravés sur le dessus du couvercle 320, les trois repères 310 correspondant préférentiellement aux extrémités d'un triangle isocèle rectangle de dimension connue. Le choix du ou des repère(s) peut s'effectuer pour des questions de design de la pièce.

La pièce peut également être utilisée comme référence lorsque l'on connait le modèle de la pièce. Par exemple dans le cadre d'une coque de téléphone, il est facilement de déterminer une orientation d'une coque de téléphone en tenant compte de la position d'ouvertures formées dans la coque en regard d'éléments du téléphone tel qu'une caméra, un connecteur, des boutons, etc. Il s'agit également du cas du bouchon tronqué tel que décrit dans la demande de brevet français FR2109647.

Les exemples présentés ici sont non limitatifs et l'homme du métier cherchant à authentifier une pièce en plastique quelconque, formée par injection, peut adapter sans difficultés le présent exemple d'un mode de réalisation de l'invention, en ajoutant une quantité d'impuretés dans le composant principal.

Préférentiellement, les impuretés sont formées dans le même matériau que le composant principal ou ayant au moins une densité similaire pour des questions d'homogénéité du mélange.

Les matériaux utilisés aussi bien pour le composant principal que pour le composant secondaire sont tout type de matériau plastique adapté à l'injection, tel que le polyéthylène (PE), le polyéthylène haute densité (PEHD), le polyamide, le polypropylène, le polystyrène, le polyméthacrylate de méthyle (PMMA), le poly(téré'htalate d'éthylène) (PET), etc.

Les impuretés peuvent également correspondre à un grade différent du composant principal. La pièce injectée peut par exemple être fabriquée avec deux grades de polyéthylène.

Dans des variantes de ce mode de réalisation particulier de l'invention, les impuretés peuvent être formés dans un matériau différent tel que du sable, du quartz, etc. afin de former des éléments distinguables telles que des inclusions.

Il convient de souligner que dans la mesure où les impuretés sont injectées avec le composant principal, les éléments détectables peuvent s'étendre au-delà de la zone 110 d'identification.

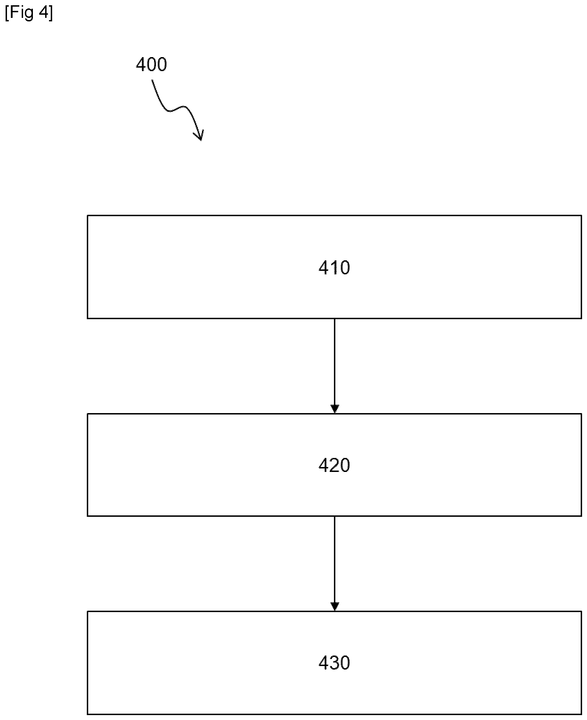

La figure 4 illustre sous la forme d'un schéma synoptique un procédé 400 de fabrication de la pièce 100.

Le procédé 400 de fabrication comprend une étape 420 de formation de la pièce par injection plastique du composant plastique comportant une quantité non négligeable d'impuretés dans le moule d'injection.

La technique d'injection plastique utilisée au cours de cette deuxième étape 420 est similaire aux techniques bien connues de l'homme du métier.

Il convient de souligner que les impuretés peuvent être mélangées au composant plastique en amont de l'injection, au cours d'une étape 410, ou être injectées séparément directement dans le moule d'injection via deux buses distinctes.

Il peut également être envisagé d'injecter judicieusement les impuretés par exemple pour concentrer les éléments distinguables dans la zone d'identification. En considérant une injection par le centre de la pièce, le composant principal peut à cet effet être injecté seul dans un premier temps puis avec les impuretés dans un second temps. Comme illustré en figure 2, les éléments distinguables 240 peuvent ainsi être concentrés sur le pourtour de la pièce 200.

Optionnellement, le procédé 400 de fabrication comprend une troisième étape 430 de gravure d'au moins un repère sur la surface extérieure de la pièce 100, à proximité ou à l'intérieur de la zone 110 d'indentification. Cette troisième étape 430 est notamment mise en oeuvre lorsqu'au moins un repère n'est pas formé directement lors de la deuxième étape d'injection, par la présence d'une empreinte correspondante dans le moule d'injection. La gravure d'un repère n'est par exemple pas nécessaire lorsque le repère correspond à un élément de la pièce identifiable sans difficulté, comme par exemple la forme tronquée du bouchon ou lorsque le modèle tridimensionnel de la pièce est connu. Dans ce dernier cas, la pièce comprend généralement une dissymétrie selon au moins un axe ou un plan, afin de permettre d'identifier sans difficultés son orientation dans une image.

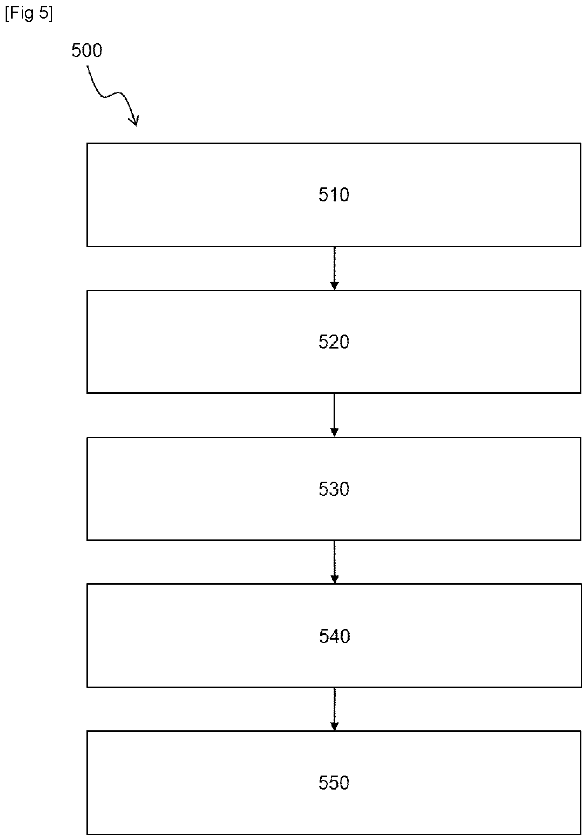

La figure 5 illustre sous la forme d'un schéma synoptique un procédé 500 d'authentification de la pièce 100.

Le procédé 500 d'authentification comprend une première étape 510 d'acquisition par une caméra d'au moins une image de la zone 110 d'identification de la pièce 100.

Au cours d'une deuxième étape 520 du procédé 500, une détection du ou des repère(s) dans au moins une image acquise précédemment est effectuée, ici du repère 120 formée en creux sur la surface extérieure du couvercle 105 du bouchon 100. Cette reconnaissance peut par exemple être effectuée par toute technique bien connue de l'homme du métier comme par exemple une détection d'amers dans l'image, une détection par des techniques d'apprentissage profond connues sous le terme anglais de « *deep learning* », etc.

Une fois le ou les repère(s) détecté(s) dans au moins une image, voire dans chaque image, une détermination d'une orientation de la zone 110 par rapport à la caméra est effectuée au cours d'une troisième étape 530 pour chaque image acquise.

La détermination de l'orientation est effectuée en calculant la déformation d'un modèle représentatif du ou des repère(s) se superposant au(x) repère(s). Selon les cas, le modèle représentatif peut être tridimensionnel ou bidimensionnel (plan). Dans l'exemple de la figure 1, le modèle représentatif est un plan de la circonférence du couvercle 105, soit un cercle tronqué.

Une détermination d'une pose d'un modèle représentatif du ou des repère(s), voire de la zone d'identification, dans le repère de la caméra acquérant la ou les image(s) acquise(s) peut être effectuée pour chaque image acquise. La pose correspond au positionnement et à l'orientation tridimensionnels du modèle représentatif dans le repère de la caméra, afin que le modèle représentatif se superpose au(x) repère(s) visible(s) dans chaque image acquise.

Une dimension caractéristique du ou des repère(s) peut être également déterminée au cours de l'étape 530 afin de donner une échelle à la zone d'identification.

Il convient de souligner que les étapes 520 et 530 peuvent être dans certains cas effectuées concomitamment, notamment lorsqu'une détection de type *deep learning* est effectuée.

Une fois la détermination de l'orientation, une transformation de l'image de la zone d'identification peut être effectuée au cours d'une quatrième étape 540 du procédé 500. Le but de cette transformation est de redresser l'image afin de correspondre à une image de la zone d'identification prise de face.

Il convient de souligner que ce redressement peut s'apparenter au traitement effectué au moment de la lecture d'un QR code où trois repères délimitant le code sont identifiés et servent pour déterminer l'orientation ainsi que l'échelle du QR code.

Il convient de souligner que l'échelle utilisée pour la cartographie est relative par rapport à un bord du repère ou par la distance entre deux repères, et sert généralement de référence pour l'authentification. Il n'est donc pas nécessaire de connaitre une dimension réelle du ou des repère(s) pour effectuer l'authentification. La connaissance d'une dimension relative ou d'un rapport de dimension, par exemple la position de la troncature par rapport au rayon dans le cas d'un cercle tronqué comme pour la pièce 100 illustrée en figure 1, suffit pour donner une échelle relative à la cartographie.

Une cartographie des éléments distinguables 109 visibles est effectuée dans l'image transformée au cours d'une cinquième étape 550 du procédé 500 d'authentification. Un algorithme de reconnaissance des éléments distinguables 109 peut ainsi être mis en oeuvre, en utilisant par exemple des méthodes de gradient pour détecter les variations de teinte dans l'image transformée de la zone 110 d'identification.

Une comparaison de la cartographie avec une base de données de cartographie est ensuite effectuée afin d'authentifier la pièce 100. Il convient de souligner que les éléments distinguables 109 étant aléatoires dans la zone 110 d'identification, chaque pièce 100 a a *priori* une zone d'identification unique.

Si la cartographie de la zone 110 d'identification est inconnue de la base de données, un enregistrement est proposé à l'utilisateur afin d'augmenter la base pour tracer la pièce 100 ultérieurement.

Il convient de souligner que dans le cas d'une prise multiple d'images, ce qui est le cas d'une vidéo voire d'un scanner, une concaténation des différentes images peut être effectuée afin de réaliser une cartographie plus complète.

Optionnellement, des traitements de la ou des image(s) acquise(s) peuvent être effectués afin d'améliorer la qualité des images en termes de contraste ou de luminosité. Des filtres colorimétriques peuvent également être mis en oeuvre. Une correction de reflets parasites peut aussi être envisagée.

En résumé, la présente invention permet de réaliser une pièce 100 en plastique qui peut être facilement authentifiée. Il convient de souligner que les éléments distinguables 109 permettant l'authentification sont incorporées structurellement à la pièce 100, évitant ainsi une perte de l'élément d'authentification comme cela pourrait être le cas avec l'ajout d'un QR code ou d'un hologramme, et rendant de surcroît l'élément d'authentification, correspondant à la zone 110 d'identification, inviolable, infalsifiable et impossible à recopier.

Il peut également être envisagé que les éléments distinguables 109 soient invisibles à l'oeil nu, mais visible sous une lumière infrarouge ou ultraviolette en choisissant par exemple un type d'impuretés particulier ou des teintes adéquates.

L'authentification peut notamment servir dans un cadre de traçabilité de la pièce dans le cadre par exemple du recyclage de la pièce, du routage de la pièce dans un processus de logistique, d'une identification de la pièce pour connaitre une information associée (propriétaire, date de fabrication, lieu de fabrication, vérification d'une non-contrefaçon, etc.).

## Revendications

1. Pièce formée par injection d'un composant plastique dans un volume délimité par une surface, **caractérisée en ce qu'**elle comprend une pluralité d'éléments distinguables obtenus par la présence d'une quantité d'impuretés positionnées de manière aléatoire dans le composant plastique lors de l'injection, les éléments distinguables étant identifiables sur une partie de la surface de la pièce, la partie étant appelée zone d'identification, la pièce comprenant également au moins un repère à proximité ou à l'intérieur de la zone d'identification.

2. Pièce selon la revendication 1, dans laquelle les impuretés sont formées dans la même matière que le composant plastique mais avec une teinte de couleur distincte et/ou un grade distinct.

3. Pièce selon l'une quelconque des revendications 1 à 2, dans laquelle la zone d'identification présente une forme prédéterminée.

4. Pièce selon l'une quelconque des revendications 1 à 3, dans laquelle la zone d'identification est plane.

5. Pièce selon l'une quelconque des revendications 1 à 4, dans lequel au moins un repère présente une forme de cercle tronqué.

6. Pièce selon l'une quelconque des revendications 1 à 5, dans laquelle la quantité d'impuretés est comprise entre 1 et 10 % du volume du composant plastique.

7. Pièce selon l'une quelconque des revendications 1 à 6, dans laquelle au moins une dimension relative entre deux éléments du ou deux repère(s) est connue.

8. Pièce selon l'une quelconque des revendications 1 à 7, formant un bouchon pour un contenant tel qu'une bouteille.

9. Pièce selon l'une quelconque des revendications 1 à 8, dans laquelle le composant plastique est du polyéthylène haute densité (PEHD).

10. Procédé de fabrication d'une pièce par injection plastique, selon l'une quelconque des revendications 1 à 9, **caractérisé en ce que** lors de l'injection une quantité d'impuretés est mélangé au composant plastique.

11. Procédé de fabrication selon la revendication 10, dans lequel les impuretés sont injectées uniquement pendant au moins une période prédéterminée.

12. Procédé de fabrication selon l'une quelconque des revendications 10 à 11, comprenant également une étape de marquage d'au moins un repère sur la surface de la pièce.

13. Procédé d'authentification d'une pièce selon l'une quelconque des revendications 1 à 9, comprenant des étapes de :
• acquisition, par une caméra, d'au moins une image de la zone d'identification de la pièce ;
• détection du ou des repère(s) dans ladite au moins image de la zone d'identification de la pièce ;
• détermination d'une orientation de la zone d'identification par rapport à la caméra et d'une dimension caractéristique du ou des repère(s) dans l'image ;
• transformation de l'image de la zone d'identification en fonction de l'orientation déterminée auparavant, la transformation comprenant une rotation et/ou une déformation géométrique de définition mathématique connue ;
• cartographie des imperfections visibles dans l'image transformée ; et
• comparaison de la cartographie obtenue avec une base de données de cartographie existante.
